# EUROPÄISCHE PATENTANMELDUNG

(11) **EP 4 768 199 A1**
(43) Veröffentlichungstag der Anmeldung: **01.07.2026**
(21) Anmeldenummer: 25219709.0
(22) Anmeldetag: 01.12.2025
(51) Int. Cl.: B25J 9/16, G05B 19/418, B66F 17/00

(54) **VORRICHTUNG UND SYSTEM ZUM BETREIBEN VON TRANSPORTROBOTERN**

(30) Priorität: 27.12.2024 DE 102024139798
(71) Anmelder: STILL GmbH, 22113 Hamburg (DE)
(72) Erfinder: Ignatov, Marina, 24114 Kiel (DE); Schüthe, Dennis, 21244 Buchholz (DE)
(74) Vertreter: Patentship Patentanwaltgesellschaft

(57) **Zusammenfassung**

Die Erfindung betrifft eine Datenverarbeitungsvorrichtung (110) zum Verwalten einer Vielzahl von Transportrobotern (120a,b), insbesondere Flurförderzeugen (120a,b), in einem intralogistischen Umfeld, insbesondere Warenlager. Die Datenverarbeitungsvorrichtung (110) umfasst eine Kommunikationsschnittstelle (113), welche ausgebildet ist, eine Vielzahl von Sensordaten zu empfangen, welche Informationen über die Umgebung von jedem Transportroboter der Vielzahl von Transportrobotern (120a,b) in dem intralogistischen Umfeld enthalten. Ferner umfasst die Datenverarbeitungsvorrichtung (110) eine Prozessoreinrichtung (111), welche ausgebildet ist, auf der Grundlage der Vielzahl von Sensordaten einen digitalen Zwilling des intralogistischen Umfelds mit der Vielzahl von Transportrobotern (120a,b) zu erzeugen und zu aktualisieren. Die Prozessoreinrichtung (111) ist ferner ausgebildet, eine Supervisor-Funktion zu implementieren, wobei die Supervisor-Funktion ausgebildet ist, auf der Grundlage der Vielzahl von Sensordaten ein Fehlverhalten von wenigstens einem Transportroboter der Vielzahl von Transportrobotern (120a,b) zu erkennen und eine oder mehrere Gegenmaßnahmen zu bestimmen, um das Fehlverhalten des wenigstens einen Transportroboters zu korrigieren.

## Beschreibung

Die Erfindung betrifft eine Vorrichtung und ein System zum Betreiben, insbesondere Steuern einer Vielzahl von Transportrobotern, insbesondere Flurförderzeugen, in einem intralogistischen Umfeld, insbesondere in einem Warenlager.

In der Intralogistik werden für den Transport und die Lagerung von Produkten, Waren und Materialien oftmals Verpackungen und/oder Ladungsträger, beispielsweise Gitterboxen oder Paletten, insbesondere Europaletten, verwendet. Zur Handhabung derartiger Verpackungen und/oder Ladungsträger in der Intralogistik, d.h. dem innerbetrieblichen Materialfluss, z.B. in einem Warenlager, werden Transportroboter in Form von automatisierten Flurförderzeuges, z.B. Gabelstaplern eingesetzt. Derartige Fahrerlose Transportsysteme (FTS) ermöglichen eine Automatisierung vieler Arbeitsprozesse und reduzieren immer weiter den Bedarf nach manuellen Eingriffen des Menschen. Bei Störungen ist häufig ein manuelles Eingreifen durch eine Person (auch als "Supervisor" bezeichnet) erforderlich, insbesondere in Fehlerfällen der FTS und in sicherheitskritischen Situationen. Der menschliche "Supervisor" verantwortet dabei den reibungslosen Betrieb der FTS durch passendes Eingreifen in gewünschten Situationen.

Vor diesem Hintergrund liegt der vorliegenden Erfindung die Aufgabe zu Grunde, eine verbesserte Vorrichtung sowie ein verbessertes System zum Betreiben, insbesondere Steuern einer Vielzahl von Transportrobotern, insbesondere Flurförderzeugen, in einem intralogistischen Umfeld, beispielsweise in einem Warenlager, bereitzustellen.

Diese Aufgabe wird gemäß einem ersten Aspekt der Erfindung durch eine nachstehend näher beschriebene Datenverarbeitungsvorrichtung zum Betreiben einer Vielzahl von Transportrobotern, insbesondere von zumindest teilautomatisierten Flurförderzeugen, in der Intralogistik, beispielsweise in einem Warenlager gelöst. Die Datenverarbeitungsvorrichtung gemäß dem ersten Aspekt kann als ein externer Server, insbesondere Cloud-Server ausgebildet sein.

Die Datenverarbeitungsvorrichtung gemäß dem ersten Aspekt umfasst eine Kommunikationsschnittstelle, welche ausgebildet ist, eine Vielzahl von Sensordaten zu empfangen, welche Informationen über die Umgebung von jedem Transportroboter der Vielzahl von Transportrobotern in dem intralogistischen Umfeld enthalten. Ferner umfasst die Datenverarbeitungsvorrichtung gemäß dem ersten Aspekt eine Prozessoreinrichtung, welche ausgebildet ist, auf der Grundlage der Vielzahl von Sensordaten einen digitalen Zwilling des intralogistischen Umfelds mit der Vielzahl von Transportrobotern zu erzeugen und zu aktualisieren. Die Prozessoreinrichtung ist ferner ausgebildet, eine Supervisor-Funktion zu implementieren, wobei die Supervisor-Funktion ausgebildet ist, auf der Grundlage der Vielzahl von Sensordaten ein Fehlverhalten von wenigstens einem Transportroboter der Vielzahl von Transportrobotern zu erkennen und eine oder mehrere Gegenmaßnahmen zu bestimmen, um das Fehlverhalten des wenigstens einen Transportroboters zu korrigieren bzw. diesem entgegenzuwirken.

In einer Ausführungsform umfasst die von der Prozessoreirichtung implementierte Supervisor-Funktion ein Machine Learning, ML, Modell, insbesondere ein künstliches neuronales Netzwerk.

Gemäß einer Ausführungsform ist die Datenverarbeitungsvorrichtung ferner ausgebildet, das Fehlverhalten des wenigstens einen Transportroboters in dem digitalen Zwilling des intralogistischen Umfelds mittels einer Anzeigevorrichtung darzustellen. Bei der Anzeigevorrichtung kann es sich beispielsweise um einen Monitor oder eine Datenbrille handeln, die von einem menschlichen Supervisor getragen wird, um das Fehlverhalten des wenigstens eines Transportroboters zu untersuchen.

In einer Ausführungsform umfasst die Datenverarbeitungsvorrichtung ferner eine Benutzerschnittstelle, wobei die Datenverarbeitungsvorrichtung ausgebildet ist, die eine oder mehreren Gegenmaßnahmen auf der Grundlage von Eingaben eines menschlichen Supervisors über die Benutzerschnittstelle zu bestimmen, um das Fehlverhalten des wenigstens einen Transportroboters zu korrigieren.

Gemäß einer Ausführungsform ist die Supervisor-Funktion, insbesondere das ML-Modell, ausgebildet, das Fehlverhalten des wenigstens einen Transportroboters zu klassifizieren, d.h. jeweils einer Klasse einer Vielzahl von möglichen Klassen zuzuordnen.

In einer Ausführungsform ist die Supervisor-Funktion, insbesondere das ML-Modell, ausgebildet, die eine oder mehreren Gegenmaßnahmen zu bestimmen, indem die mit dem klassifizierten Fehlverhalten verknüpften Gegenmaßnahmen bestimmt werden. Mit anderen Worten: unterschiedlichen Klassen können unterschiedliche Gegenmaßnahmen zugeordnet sein.

Gemäß einer Ausführungsform ist die Supervisor-Funktion, insbesondere das ML-Modell, ausgebildet, je nach Klassifikation des Fehlverhaltens des wenigstens einen Transportroboters eine Meldung des Fehlverhaltens des wenigstens einen Transportroboters an einen anderen menschlichen Supervisor zu senden.

In einer Ausführungsform ist die Supervisor-Funktion, insbesondere das ML-Modell, ausgebildet, von einem menschlichen Supervisor durchgeführte Gegenmaßnahmen, um das Fehlverhalten des wenigstens einen Transportroboters zu korrigieren, mittels Imitationslernen zu erlernen und bei einem entsprechenden Fehlverhalten in der Zukunft anzuwenden.

Gemäß einer Ausführungsform ist die Supervisor-Funktion, insbesondere das ML-Modell, ausgebildet, auf der Grundlage der Klassifikation des Fehlverhaltens des wenigstens einen Transportroboters dem Fehverhalten des wenigstens einen Transportroboters eine Bearbeitungspriorität zuzuweisen. Mit anderen Worten: unterschiedlichen Klassen können unterschiedliche Bearbeitungsprioritäten zugeordnet sein.

In einer Ausführungsform ist die Supervisor-Funktion, insbesondere das ML-Modell, ausgebildet, für wenigstens eine Klassifikation des Fehlverhaltens des wenigstens einen Transportroboters die eine oder mehreren Gegenmaßnahmen selbstständig, d.h. ohne das Einwirken eines menschlichen Supervisors durchzuführen, um das Fehlverhalten des wenigstens einen Transportroboters automatisiert zu korrigieren.

Gemäß einer Ausführungsform ist die Prozessoreinrichtung der Datenverarbeitungsvorrichtung gemäß dem ersten Aspekt ferner ausgebildet, die Vielzahl von Transportrobotern, d.h. deren Bewegungen zu steuern.

Gemäß einem zweiten Aspekt der Erfindung wird die vorstehend genannte Aufgabe durch ein nachstehend näher beschriebenes System zum Betreiben einer Vielzahl von Transportrobotern, insbesondere Flurförderzeugen, gelöst. Das System gemäß dem zweiten Aspekt umfasst eine Vielzahl von Transportrobotern, insbesondere von zumindest teilautomatisierten Flurförderzeugen, sowie eine Datenverarbeitungsvorrichtung gemäß dem ersten Aspekt der Erfindung, beispielsweise in Form einer Servervorrichtung, zum Steuern der Vielzahl von Transportrobotern, beispielsweise in einem Warenlager.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer Datenverarbeitungsvorrichtung zum Betreiben einer Vielzahl von Flurförderzeugen zum Transport von Warenobjekten in einem Warenlager gemäß einer Ausführungsform; und
Figur 2 eine schematische Darstellung eines Flurförderzeugs zum Transport von Warenobjekten in einem Warenlager gemäß einer Ausführungsform.

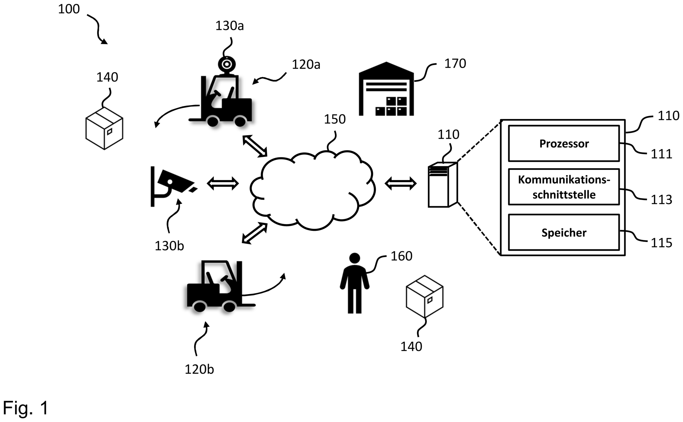

Figur 1 zeigt eine schematische Darstellung eines erfindungsgemäßen Systems 100 mit einer erfindungsgemäßen Datenverarbeitungsvorrichtung 110 zum Betreiben einer Vielzahl von zumindest teilweise automatisiert betreibbaren Transportrobotern 120a,b in Form von mobilen Flurförderzeugen 120a,b, beispielsweise einem Gabelstapler oder einem Picker in einem industriellen Umfeld, insbesondere in einem Warenlager mit einer Vielzahl von Warenobjekten und/oder Ladungsträgern 140a,b, beispielsweise Paletten 140a,b. Das industrielle Umfeld kann weitere Objekte umfassen, wie beispielsweise Personen 160 und/oder Regale 170. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 1 dargestellt, umfasst die Datenverarbeitungsvorrichtung 110 einen Prozessor 111, eine Kommunikationsschnittstelle 113 und einen, insbesondere nichtflüchtigen, Speicher 115. Der Speicher 115 kann ausgebildet sein, Daten und ausführbaren Programmcode zu speichern, der, wenn von dem Prozessor 111 der Datenverarbeitungsvorrichtung 110 ausgeführt, den Prozessor 111 veranlasst, die im Folgenden beschriebenen Funktionen, Operationen und Verfahren durchzuführen.

Wie in Figur 1 dargestellt, umfasst das System 100 ferner eine Vielzahl von Sensoren 130a,b, welche ausgebildet sind, Sensordaten in dem Warenlager und der Umgebung der Vielzahl von Transportrobotern 120a,b, insbesondere Flurförderzeugen 120a,b zu erfassen und an die Datenverarbeitungsvorrichtung 110 zu übertragen. Die Vielzahl von Sensoren 130a,b können eine Vielzahl von bildgebenden Sensoren, insbesondere Kameras 130a,b umfassen, die in dem industriellen Umfeld, insbesondere dem Warenlager und/oder an der Vielzahl von Flurförderzeugen und/oder Transportrobotern angebracht sind. Alternativ oder zusätzlich können die Vielzahl von Sensoren z.B. an den Flurförderzeugen montierten Radar- und/oder Lidar-Sensoren oder auch Mikrofone zur Erfassung von akustischen Daten, beispielsweise Spracheingaben bzw. Sprachsignalen umfassen.

In einer Ausführungsform ist die Kommunikationsschnittstelle 113 der Datenverarbeitungsvorrichtung 110 ausgebildet, drahtlos und/oder drahtgebunden die Vielzahl von Sensordaten von den Sensoren 130a,b zu empfangen und/oder mit den Transportrobotern bzw. mobilen Flurförderzeugen 120a,b und/oder zu kommunizieren. Beispielsweise kann die Kommunikationsschnittstelle 113 der Datenverarbeitungsvorrichtung 110 ausgebildet sein, über ein Kommunikationsnetzwerk, z.B. ein WLAN, 5G-Netzwerk und/oder das Internet 150 die Vielzahl von Sensordaten von den Sensoren 130a,b zu empfangen und/oder mit den Transportrobotern bzw. mobilen Flurförderzeugen 120a,b zu kommunizieren, um Daten auszutauschen.

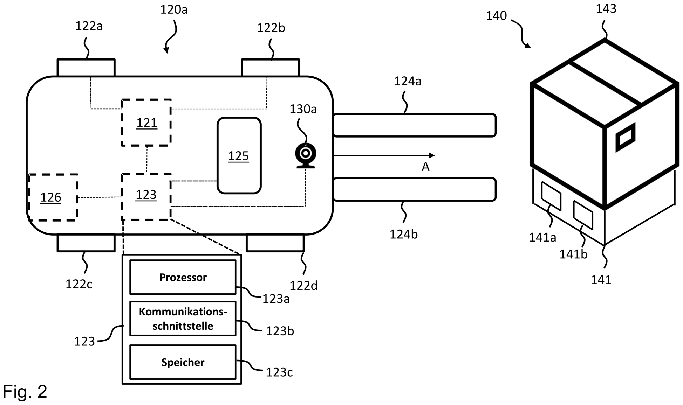

Figur 2 zeigt eine schematische Darstellung eines Transportroboters 120a in Form eines Flurförderzeugs 120a gemäß einer Ausführungsform zum Transportieren von Warenobjekten 140 in einem industriellen Umfeld, insbesondere einem Warenlager. Bei dem Transportroboter 120a in Form eines Flurförderzeugs 120a kann es sich insbesondere um einen zumindest zeitweise autonom oder teil-autonom betreibbaren Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 2 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, den Transportroboter 120a in Form eines Flurförderzeugs 120a und das Paar von Lastgabeln 124a,b relativ zu dem Warenobjekt 140 zu bewegen, um beispielsweise die Orientierung und/oder den Abstand zwischen dem Flurförderzeug 120a und der Warenobjekt 140, insbesondere dem Ladungsträger 141 zu ändern und/oder das Paar von Lastgabeln 124a,b anzuheben oder abzusenken. Zu diesem Zweck kann, wie in Figur 2 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeigeund/oder Bedienfeld 125 zur Anzeige von Informationen und/oder zum Bedienen des Flurförderzeugs 120a umfassen.

Das Flurförderzeug 120a kann eine Steuereinheit 123 umfassen, welche beispielsweise einen oder mehrere Prozessoren 123a oder Mikro-Controller 123a mit geeigneter Software umfassen kann und ausgebildet sein kann, das Flurförderzeug 120a zu steuern. Wie in der Figur 1 dargestellt, kann die Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Steuereinheit 123 ausgeführt, den Prozessor 123a veranlasst, Operationen und Verfahren zum Betrieb des Flurförderzeug 120a durchzuführen.

Das Flurförderzeug 120a kann ferner eine oder mehrere Sensoreinheiten 130a zur Erfassung von Sensordaten umfassen, welche Informationen über die aktuelle Umgebung des Flurförderzeugs 120a enthalten. In einer Ausführungsform können die Sensoreinheiten 130a, eine Bilderfassungseinheit, insbesondere eine Kamera, einen Radar-Sensor und/oder einen Lidar-Sensor umfassen, welche ausgebildet sind, bei der Bewegung des Flurförderzeugs 120a eine Vielzahl von Bilddaten, Radardaten und/oder Lidardaten der Umgebung des Flurförderzeugs 120a zu erfassen. Ferner kann das Flurförderzeug 120a eine Sensoreinheit 130a in Form eines Mikrofons aufweisen, welches ausgebildet, Spracheingaben zu erfassen.

Wie in Figur 1 dargestellt, kann das Flurförderzeug 120a ferner eine Kommunikationsschnittstelle 126 umfassen, welche ausgebildet sein kann, mit der Kommunikationsschnittstelle 113 der Datenverarbeitungsvorrichtung 110 zu kommunizieren, insbesondere zur Übertragung der Sensordaten und/oder Steuerungsdaten.

Wie in Figur 2 angedeutet, kann die Sensoreinheit 130a beispielsweise in Form einer Bilderfassungseinheit 130a vorzugsweise derart an dem Flurförderzeug 120a montiert sein, dass ein Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Wie bereits vorstehend beschrieben, ist die Datenverarbeitungsvorrichtung 110 ausgebildet, über die Kommunikationsschnittstelle 113 von den Sensoreinheiten 130a,b eine Vielzahl von Sensordaten zu empfangen, welche Informationen über die Umgebung von jedem Transportroboter der Vielzahl von Transportrobotern 120a,b in dem intralogistischen Umfeld enthalten. Erfindungsgemäß ist die Prozessoreinrichtung 111 der Datenverarbeitungsvorrichtung 110 ausgebildet, auf der Grundlage der Vielzahl von Sensordaten einen digitalen Zwilling des intralogistischen Umfelds mit der Vielzahl von Transportrobotern 120a,b zu erzeugen und zu aktualisieren. Ein solcher digitaler Zwilling wird beispielsweise in der DE 102022105079 beschrieben, auf die hiermit vollumfänglich Bezug genommen wird. Gemäß einer Ausführungsform kann der digitale Zwilling des intralogistischen Umfelds auch einen digitalen Zwilling eines jeweiliges Transportroboters 120a,b umfassen.

Wie dies nachstehend detaillierter beschrieben wird, ist die Prozessoreinrichtung 111 der Datenverarbeitungsvorrichtung 110 erfindungsgemäß ausgebildet, eine Supervisor-Funktion zu implementieren, wobei die Supervisor-Funktion ausgebildet ist, auf der Grundlage der Vielzahl von Sensordaten ein Fehlverhalten bzw. eine Störung von wenigstens einem Transportroboter der Vielzahl von Transportrobotern zu erkennen und eine oder mehrere Gegenmaßnahmen zu bestimmen, um das Fehlverhalten des wenigstens einen Transportroboters zu korrigieren bzw. diesem entgegenzuwirken. Ein Fehlverhalten bzw. eine Störung des wenigstens einen Transportroboters 120a kann beispielsweise eine blockierte Fahrbahn, ein ungeplantes Stehenbleiben, eine Betätigung eines Not-Aus-Schalters und dergleichen umfassen.

In einer Ausführungsform umfasst die von der Prozessoreirichtung 111 der Datenverarbeitungsvorrichtung 110 ein Machine Learning (Maschinelles Lernen; ML) Modell, insbesondere ein künstliches neuronales Netzwerk, beispielsweise ein LLM.

Gemäß einer Ausführungsform ist die Datenverarbeitungsvorrichtung 110 ferner ausgebildet, das Fehlverhalten des wenigstens einen Transportroboters 120a in dem digitalen Zwilling des intralogistischen Umfelds mittels einer Anzeigevorrichtung darzustellen. Bei der Anzeigevorrichtung kann es sich beispielsweise um einen Monitor oder eine Datenbrille handeln, die von einem menschlichen Supervisor getragen wird, um das Fehlverhalten des wenigstens eines Transportroboters zu untersuchen. In einer Ausführungsform kann ein menschlicher Supervisor über die Anzeigevorrichtung die Situation aus einer beliebigen Kamerasicht beobachten. Bei einer Anzeigevorrichtung in Form einer Datenbrille kann bei einer Drehung des Kopfes ebenfalls die Ansicht geändert werden.

In einer Ausführungsform umfasst die Datenverarbeitungsvorrichtung 110 ferner eine Benutzerschnittstelle, wobei die Datenverarbeitungsvorrichtung 110 ausgebildet ist, die eine oder mehreren Gegenmaßnahmen auf der Grundlage von Eingaben eines menschlichen Supervisors über die Benutzerschnittstelle zu bestimmen, um das Fehlverhalten des wenigstens einen Transportroboters 120a zu korrigieren.

Gemäß einer Ausführungsform ist das von der Prozessoreinrichtung 111 implementierte ML-Modell ausgebildet, das Fehlverhalten des wenigstens einen Transportroboters 120a zu klassifizieren, d.h. jeweils einer Klasse einer Vielzahl von möglichen Klassen zuzuordnen. In einer Ausführungsform ist das von der Prozessoreinrichtung 111 implementierte ML-Modell ausgebildet, die eine oder mehreren Gegenmaßnahmen zu bestimmen, indem die mit dem klassifizierten Fehlverhalten verknüpften Gegenmaßnahmen bestimmt werden. Mit anderen Worten: unterschiedlichen Klassen können unterschiedliche Gegenmaßnahmen zugeordnet sein.

Gemäß einer Ausführungsform ist das von der Prozessoreinrichtung 111 implementierte ML-Modell ausgebildet, je nach Klassifikation des Fehlverhaltens des wenigstens einen Transportroboters 120a eine Meldung des Fehlverhaltens des wenigstens einen Transportroboters 120a an einen anderen menschlichen Supervisor zu senden. In einer Ausführungsform ist das von der Prozessoreinrichtung 111 implementierte ML-Modell ausgebildet, von einem menschlichen Supervisor durchgeführte Gegenmaßnahmen, um das Fehlverhalten des wenigstens einen Transportroboters 120a zu korrigieren, mittels Imitationslernen zu erlernen und bei einem entsprechenden Fehlverhalten in der Zukunft anzuwenden.

Gemäß einer Ausführungsform ist das von der Prozessoreinrichtung 111 implementierte ML-Modell ausgebildet, auf der Grundlage der Klassifikation des Fehlverhaltens des wenigstens einen Transportroboters 120a dem Fehverhalten des wenigstens einen Transportroboters 120a eine Bearbeitungspriorität zuzuweisen. Mit anderen Worten: unterschiedlichen Klassen können unterschiedliche Bearbeitungsprioritäten zugeordnet sein.

In einer Ausführungsform ist das von der Prozessoreinrichtung 111 implementierte ML-Modell ausgebildet, für wenigstens eine Klassifikation des Fehlverhaltens des wenigstens einen Transportroboters 120a die eine oder mehreren Gegenmaßnahmen selbstständig, d.h. ohne das Einwirken eines menschlichen Supervisors durchzuführen, um das Fehlverhalten des wenigstens einen Transportroboters 120a automatisiert zu korrigieren.

Wie der Fachmann erkennt, kann somit mithilfe der Kategorien eine (Vor-)Priorisierung des Fehlverhaltens bzw. Störung und der Bedarf des Einsatzes eines menschlichen Supervisors vorgenommen werden. Die entsprechende Kategorie kann auch mit unterschiedlichen bildlichen Symbolen dem menschlichen Supervisor angezeigt werden, wodurch ein schnelles Eingreifen des Supervisors über die Benutzerschnittstelle ermöglicht wird. Wie bereits vorstehend beschrieben, können einige Fehlerzustände bzw. Störungen durch die Kategorisierung automatisch aufgelöst werden, wenn bekannte Mechanismen bei den jeweiligen Fehlern bereits gegriffen haben. Dabei kann ein menschlicher Supervisor diesen Prozess der Fehlerbehebung im digitalen Zwilling verfolgen, ohne selbst eingreifen zu müssen. Dabei wird ihm der Zustand des Vorgangs angezeigt. Erfolgen Eingriffe des menschlichen Supervisors können die entsprechenden Daten von der Datenverarbeitungsvorrichtung 110 aufgezeichnet werden und mittels Imitationslernen (Imitation Learning) dazu genutzt werden, ein Fehlverhalten bzw. eine Störung des Flurförderzeugs 120a bei einer ähnlichen Situation in der Zukunft automatisiert zu beheben. Gemäß einer weiteren Ausführungsform kann Reinforcement Learning genutzt werden, wenn bekannt ist, dass die Situation gerade nicht automatisiert gelöst werden kann, d.h. vom Fahrzeug (negative reward) aber durch eine automatisierte supervisory function (feedback). In einem solchen Fall kann die aktuelle Fehlersituation zunächst mit dem digitalen Zwilling durchsimuliert werden, bevor das reale Flurförderzeug 120a Aktionen ausführt.

## Patentansprüche

1. Datenverarbeitungsvorrichtung (110) zum Verwalten einer Vielzahl von Transportrobotern (120a,b), insbesondere Flurförderzeugen (120a,b), in einem intralogistischen Umfeld, insbesondere Warenlager, wobei die Datenverarbeitungsvorrichtung (110) umfasst:
eine Kommunikationsschnittstelle (113), welche ausgebildet ist, eine Vielzahl von Sensordaten zu empfangen, welche Informationen über die Umgebung von jedem Transportroboter der Vielzahl von Transportrobotern (120a,b) in dem intralogistischen Umfeld enthalten; und
eine Prozessoreinrichtung (111), welche ausgebildet ist, auf der Grundlage der Vielzahl von Sensordaten einen digitalen Zwilling des intralogistischen Umfelds mit der Vielzahl von Transportrobotern (120a,b) zu erzeugen und zu aktualisieren;
wobei die Prozessoreinrichtung (111) ferner ausgebildet ist, eine Supervisor-Funktion zu implementieren, wobei die Supervisor-Funktion ausgebildet ist, auf der Grundlage der Vielzahl von Sensordaten ein Fehlverhalten von wenigstens einem Transportroboter der Vielzahl von Transportrobotern (120a,b) zu erkennen und eine oder mehrere Gegenmaßnahmen zu bestimmen, um das Fehlverhalten des wenigstens einen Transportroboters zu korrigieren.

2. Datenverarbeitungsvorrichtung (110) nach Anspruch 1, wobei die Supervisor-Funktion ein Maschine Learning, ML, Modell umfasst.

3. Datenverarbeitungsvorrichtung (110) nach einem der vorhergehenden Ansprüche, wobei die Datenverarbeitungsvorrichtung (110) ausgebildet ist, das Fehlverhalten des wenigstens einen Transportroboters in dem digitalen Zwilling des intralogistischen Umfelds mittels einer Anzeigevorrichtung darzustellen.

4. Datenverarbeitungsvorrichtung (110) nach Anspruch 3, wobei die Datenverarbeitungsvorrichtung (110) ferner eine Benutzerschnittstelle umfasst, und wobei die Datenverarbeitungsvorrichtung (110) ausgebildet ist, die eine oder mehreren Gegenmaßnahmen auf der Grundlage von Eingaben eines menschlichen Supervisors über die Benutzerschnittstelle zu bestimmen, um das Fehlverhalten des wenigstens einen Transportroboters zu korrigieren.

5. Datenverarbeitungsvorrichtung (110) nach einem der vorhergehenden Ansprüche, wobei die Supervisor-Funktion, insbesondere das ML-Modell, ausgebildet ist, das Fehlverhalten des wenigstens einen Transportroboters zu klassifizieren.

6. Datenverarbeitungsvorrichtung (110) nach Anspruch 5, wobei die Supervisor-Funktion, insbesondere das ML-Modell, ausgebildet ist, die eine oder mehreren Gegenmaßnahmen zu bestimmen, indem die mit dem klassifizierten Fehlverhalten verknüpften Gegenmaßnahmen bestimmt werden.

7. Datenverarbeitungsvorrichtung (110) nach Anspruch 5 oder 6, wobei die Supervisor-Funktion, insbesondere das ML-Modell, ausgebildet ist, je nach Klassifikation des Fehlverhaltens des wenigstens einen Transportroboters eine Meldung des Fehlverhaltens des wenigstens einen Transportroboters an einen anderen menschlichen Supervisor zu senden.

8. Datenverarbeitungsvorrichtung (110) nach einem der Ansprüche 5 bis 7, wobei die Supervisor-Funktion, insbesondere das ML-Modell, ausgebildet ist, von einem menschlichen Supervisor durchgeführte Gegenmaßnahmen, um das Fehlverhalten des wenigstens einen Transportroboters zu korrigieren, mittels Imitationslernen zu erlernen und anzuwenden.

9. Datenverarbeitungsvorrichtung (110) nach einem der Ansprüche 5 bis 8, wobei die Supervisor-Funktion, insbesondere das ML-Modell, ausgebildet ist, auf der Grundlage der Klassifikation des Fehlverhaltens des wenigstens einen Transportroboters dem Fehverhalten des wenigstens einen Transportroboters eine Bearbeitungspriorität zuzuweisen.

10. Datenverarbeitungsvorrichtung (110) nach einem der Ansprüche 5 bis 9, wobei die Supervisor-Funktion, insbesondere das ML-Modell, ausgebildet ist, für wenigstens eine Klassifikation des Fehlverhaltens des wenigstens einen Transportroboters die eine oder mehreren Gegenmaßnahmen durchzuführen, um das Fehlverhalten des wenigstens einen Transportroboters automatisiert zu korrigieren.

11. Datenverarbeitungsvorrichtung (110) nach einem der vorhergehenden Ansprüche, wobei die Prozessoreinrichtung (111) ferner ausgebildet ist, die Vielzahl von Transportrobotern (120a,b) zu steuern.

12. Datenverarbeitungsvorrichtung (110) nach einem der vorhergehenden Ansprüche, wobei die Datenverarbeitungsvorrichtung (110) ein Cloud-Server (110) ist.

13. System zum Betreiben einer Vielzahl von Transportrobotern (120a,b), insbesondere Flurförderzeugen (120a,b), in einem intralogistischen Umfeld, insbesondere Warenlager, wobei das System umfasst:
eine Vielzahl von Transportrobotern (120a,b), insbesondere Flurförderzeugen (120a,b); und
eine Datenverarbeitungsvorrichtung (110) nach einem der vorhergehenden Ansprüche.
